(19) Europäisches Patentamt / European Patent Office / Office européen des brevets

(11) **EP 2 715 606 B1**

(12) **FASCICULE DE BREVET EUROPEEN**

(45) Date de publication et mention
de la délivrance du brevet:
**01.04.2015 Bulletin 2015/14**

(21) Numéro de dépôt: **12722429.3**

(22) Date de dépôt: **18.04.2012**

(51) Int Cl.:
**G06K 7/10** *(2006.01)*　　**G06K 7/00** *(2006.01)*

(86) Numéro de dépôt international:
**PCT/FR2012/050842**

(87) Numéro de publication internationale:
**WO 2012/164178 (06.12.2012 Gazette 2012/49)**

(54) **ASSISTANCE AU POSITIONNEMENT D'UN TRANSPONDEUR**

TRANSPONDERPOSITIONIERHILFE

TRANSPONDER POSITIONING ASSISTANCE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **03.06.2011 FR 1154861**

(43) Date de publication de la demande:
**09.04.2014 Bulletin 2014/15**

(73) Titulaire: **STMICROELECTRONICS (ROUSSET)
SAS**
**13790 Rousset (FR)**

(72) Inventeur: **WUIDART, Luc**
**F-83910 Pourrieres (FR)**

(74) Mandataire: **Thibon, Laurent
Cabinet Beaumont
1, rue Champollion
38000 Grenoble (FR)**

(56) Documents cités:
**WO-A2-2009/138687**

**Description**

Domaine de l'invention

La présente invention concerne de façon générale les systèmes utilisant des transpondeurs, c'est-à-dire des émetteurs-récepteurs (généralement mobiles) susceptibles de communiquer sans contact et sans fil avec un terminal.

Exposé de l'art antérieur

Des systèmes à transpondeurs électromagnétiques sont de plus en plus utilisés avec l'apparition des dispositifs mobiles de télécommunication équipés de routeurs de communication en champ proche (NFC - Near Field Communication). Dans ces dispositifs, l'équipement mobile peut servir à la fois de lecteur de transpondeurs, par exemple de lecteur de carte à puce sans contact, et à l'inverse de transpondeur lui-même pour communiquer en champ proche avec un terminal, par exemple un autre dispositif mobile, une borne d'accès, etc.

Une difficulté récurrente dans l'utilisation des transpondeurs électromagnétiques est, pour la qualité de la communication, la distance séparant le transpondeur du lecteur.

En particulier, un réflexe naturel du porteur du transpondeur (par exemple de la carte à puce sans contact) est de presser la carte contre la surface du lecteur. Cette pression peut même aller parfois jusqu'à plier la carte. Il en découle des contraintes mécaniques sur la carte à puce qui sont susceptibles d'endommager l'antenne généralement constituée d'un enroulement conducteur noyé dans la carte, ou d'endommager les contacts entre l'antenne et la puce.

De plus, la position imposée au transpondeur n'est souvent pas optimale au fonctionnement du système.

Résumé de l'invention

Il serait souhaitable de disposer de moyens pour éviter qu'un utilisateur ne soumette un transpondeur à des contraintes mécaniques inutiles.

Il serait par ailleurs souhaitable d'optimiser la communication entre un transpondeur (qu'il s'agisse d'une carte à puce ou d'un dispositif mobile équipé d'un routeur NFC fonctionnant en transpondeur) et un terminal.

Un objet d'un mode de réalisation de la présente invention est de pallier tout ou partie des inconvénients des systèmes à transpondeur connus.

Pour atteindre tout ou partie de ces objets ainsi que d'autres, on prévoit un procédé d'assistance au positionnement d'un transpondeur électromagnétique vis-à-vis d'un terminal par un utilisateur, dans lequel :

une première valeur du courant dans un circuit oscillant du terminal est périodiquement mesurée ;
une deuxième valeur d'un rapport entre une valeur à vide de ce courant, mémorisée lorsqu'aucun transpondeur n'est dans le champ du terminal, et la première valeur est calculée ; et
des éléments d'information à destination de l'utilisateur sont commandés en fonction de ladite deuxième valeur.

Selon un mode de réalisation de la présente invention, ladite deuxième valeur est comparée par rapport à deux seuils encadrant la valeur 2.

Selon un mode de réalisation de la présente invention, les seuils sont choisis en fonction de paramètres de fonctionnement autour d'une position de couplage optimum dans laquelle on considère que la communication entre le transpondeur et le terminal est optimale.

Selon un mode de réalisation de la présente invention, lorsque ladite valeur du rapport est comprise entre les deux seuils, le terminal signale à l'utilisateur de ne plus modifier la distance entre le transpondeur et le terminal.

Selon un mode de réalisation de la présente invention, on compare successivement la deuxième valeur aux deux seuils pour définir si l'utilisateur doit augmenter ou réduire la distance entre le terminal et le transpondeur.

Selon un mode de réalisation de la présente invention, ladite deuxième valeur est comparée à la valeur dudit rapport calculée lors d'une mesure précédente pour déterminer si la distance entre le transpondeur et le terminal évolue.

Selon un mode de réalisation de la présente invention, lesdits éléments d'information indiquent à l'utilisateur s'il doit réduire ou augmenter la distance entre le transpondeur et le terminal ou ne plus modifier cette distance.

On prévoit également un terminal de lecture d'un transpondeur électromagnétique comportant des moyens adaptés à la mise en oeuvre du procédé.

On prévoit également un téléphone mobile comportant un tel terminal.

Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :

la figure 1 représente, de façon très schématique, un exemple de système de communication en champ proche à transpondeur ;
la figure 2 est un schéma bloc simplifié du terminal de la figure 1 ;
la figure 3 est un schéma bloc simplifié du transpondeur de la figure 1 ;

la figure 4 illustre un exemple d'évolution de la tension aux bornes du circuit résonnant du transpondeur en fonction d'un couplage normalisé ;

les figures 5A, 5B et 5C illustrent un mode de réalisation du procédé d'assistance à la communication entre un transpondeur et un lecteur ;

la figure 6 illustre l'évolution d'un rapport de courant dans le circuit oscillant du lecteur en fonction du couplage ; et

la figure 7 est un schéma bloc illustrant un mode de mise en oeuvre du procédé d'assistance à la communication.

<u>Description détaillée</u>

De mêmes éléments ont été désignés par de mêmes références aux différentes figures. Pour des raisons de clarté, seuls les étapes et éléments utiles à la compréhension des modes de réalisation décrits ont été représentés et seront détaillés. En particulier, la provenance et la destination des données transmises lors des communications entre un transpondeur et un terminal n'ont pas été détaillées, les modes de réalisation décrits étant compatibles avec toute communication usuelle.

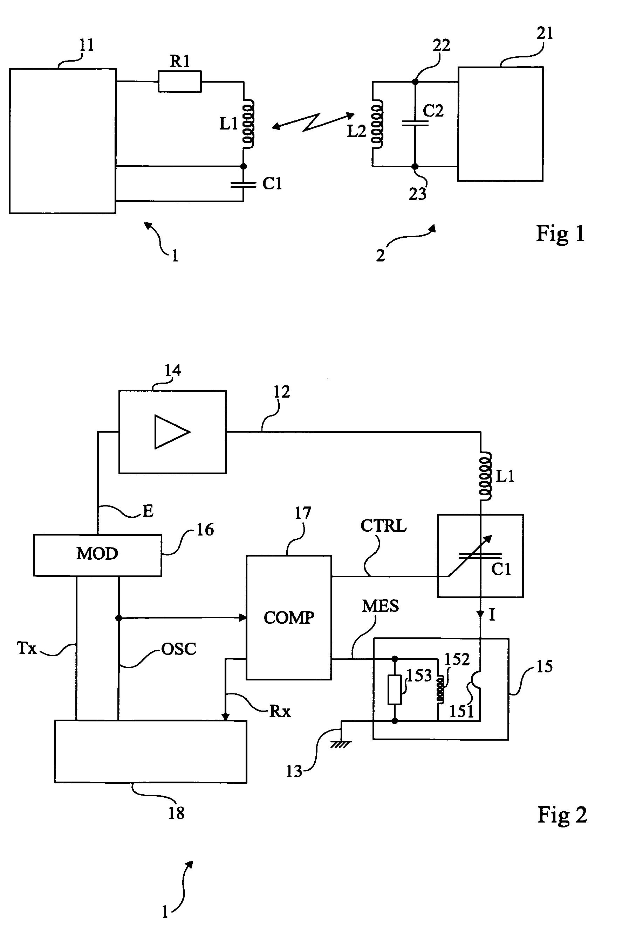

La figure 1 représente, de façon très schématique et simplifiée, un exemple de système de communication et de téléalimentation comportant un terminal 1 ou borne de lecture et/ou d'écriture, et un transpondeur 2.

Généralement, le terminal 1 comporte un circuit oscillant série, formé d'une inductance L1 en série avec un condensateur C1 et une résistance R1. Ce circuit oscillant série est commandé par un dispositif 11 comportant, entre autres et de façon non limitative, un amplificateur ou coupleur d'antenne et un circuit de commande et d'exploitation des transmissions incluant notamment un modulateur/démodulateur et un circuit (généralement un microprocesseur) de traitement des commandes et des données. Le dispositif 11 communique généralement avec différents circuits d'entrée/sortie (clavier, écran, éléments d'échange avec un serveur, etc.) et/ou de traitement non représentés. Les éléments du terminal 1 tirent l'énergie nécessaire à leur fonctionnement d'un circuit d'alimentation (non représenté) raccordé, par exemple, au réseau de distribution électrique ou à une batterie (par exemple, celle d'un véhicule automobile ou d'un téléphone ou ordinateur portable).

Un transpondeur 2 apte à coopérer avec le terminal 1 comporte un circuit oscillant, par exemple parallèle, formé d'une inductance L2 en parallèle avec un condensateur C2 entre deux bornes 22 et 23 d'entrée d'un circuit 21 de commande et de traitement. Les bornes 22 et 23 sont, en pratique, reliées à des bornes d'entrée d'un élément de redressement (non représenté en figure 1) dont des bornes de sortie constituent des bornes d'alimentation des circuits internes au transpondeur. Ces circuits comportent généralement une mémoire et un modulateur pour transmettre des informations au terminal.

Selon le type de transpondeur (dépendant de l'application et des tâches qu'il est censé effectuer), ces circuits peuvent également comporter un démodulateur des signaux éventuellement reçus du terminal, un microprocesseur et divers autres circuits de traitement.

Les circuits oscillants du terminal et du transpondeur sont généralement accordés sur une même fréquence correspondant à la fréquence d'un signal d'excitation du circuit oscillant du terminal. Ce signal haute fréquence (par exemple, 13,56 MHz) sert non seulement de porteuse de transmission de données du terminal vers le transpondeur, mais également de porteuse de téléalimentation à destination des transpondeurs se trouvant dans le champ du terminal. Quand un transpondeur 2 se trouve dans le champ d'un terminal 1, une tension haute fréquence est engendrée aux bornes 21 et 23 du circuit résonant du transpondeur. Cette tension sert à fournir la tension d'alimentation des circuits électroniques 21 du transpondeur.

La figure 2 est un schéma bloc d'un mode de réalisation d'un terminal 1. Comme indiqué précédemment, le terminal comporte un circuit oscillant formé d'une inductance ou antenne L1 en série avec un élément capacitif C1 et un élément résistif R1. Dans l'exemple de la figure 2, ces éléments sont connectés entre une borne 12 de sortie d'un amplificateur ou coupleur d'antenne 14 et une borne 13 à un potentiel de référence (généralement la masse). En figure 2, la résistance R1 est supposée incluse dans le bloc 14. Un élément 15 de mesure du courant dans le circuit oscillant est intercalé, par exemple, entre l'élément capacitif C1 et la masse 13. Cet élément de mesure 15 fait partie d'une boucle de régulation de phase qui sera décrite plus loin. L'amplificateur 14 reçoit un signal E de transmission haute fréquence issu d'un modulateur 16 (MOD) qui reçoit une fréquence de référence (signal OSC) par exemple d'un oscillateur à quartz (non représenté). Le modulateur 16 reçoit, si besoin, un signal Tx de données à transmettre et, en l'absence de transmission de données depuis le terminal, fournit la porteuse haute fréquence (par exemple 13,56 MHz) propre à téléalimenter un transpondeur. L'élément capacitif C1 est de préférence un élément à capacité variable et commandable par un signal CTRL. On réalise une régulation de phase du courant dans l'antenne L1 par rapport à un signal de référence. Cette régulation est une régulation du signal haute fréquence, c'est-à-dire du signal de la porteuse correspondant au signal E en l'absence de données à transmettre. La régulation est effectuée en faisant varier la capacité C1 du circuit oscillant du terminal de façon à maintenir le courant dans l'antenne L1 en relation de phase constante avec le signal de référence. Ce signal de référence correspond, par exemple, au signal OSC fourni par l'oscillateur au modulateur. Le signal CTRL est issu d'un circuit 17 (COMP) dont le rôle est de détecter l'écart de phase par rapport au signal de référence et de modifier en conséquence la capacité de l'élément C1. La mesure de phase est effectuée par exemple, à partir d'une mesure du courant I dans le circuit oscillant grâce à l'élément de mesure 15. Dans l'exemple représenté, cet élément est constitué d'un transformateur d'intensité comportant un enroulement primaire 151 entre l'élément C1 et la borne 13 de masse, et un enroulement secondaire 152 dont une première borne est connectée directement à la masse et dont l'autre borne fournit un signal MES indicateur du résultat de la mesure. Une résistance 153 de conversion courant-tension est connectée en parallèle avec l'enroulement secondaire 152. Le résultat de la mesure MES est envoyé au comparateur 17 qui asservit en conséquence la valeur de l'élément capacitif C1 au moyen du signal CTRL.

Dans le mode de réalisation illustré en figure 2, le comparateur 17 utilise le même démodulateur de phase (non représenté) que celui qui sert à démoduler le signal provenant du transpondeur et que reçoit éventuellement le circuit oscillant. Par conséquent, le comparateur 17 fournit un signal Rx restituant une rétromodulation éventuelle des données reçues d'un transpondeur à un bloc 18 symbolisant le reste des circuits électroniques du terminal.

Le temps de réponse de la boucle de régulation de phase est choisi suffisamment long pour ne pas gêner la rétromodulation éventuelle provenant d'un transpondeur, et suffisamment court devant la vitesse de passage d'un transpondeur dans le champ du terminal. On peut parler de régulation statique par rapport aux fréquences de modulation (par exemple, une fréquence de la porteuse de téléalimentation de 13,56 MHz et une fréquence de rétromodulation de 847,5 kHz utilisée pour transmettre des données du transpondeur vers la borne).

En variante au transformateur d'intensité de la figure 2, on pourra utiliser d'autres éléments de mesure du courant (par exemple, une résistance).

Un exemple de terminal à régulation de phase est décrit dans le document EP-A-0 857 981.

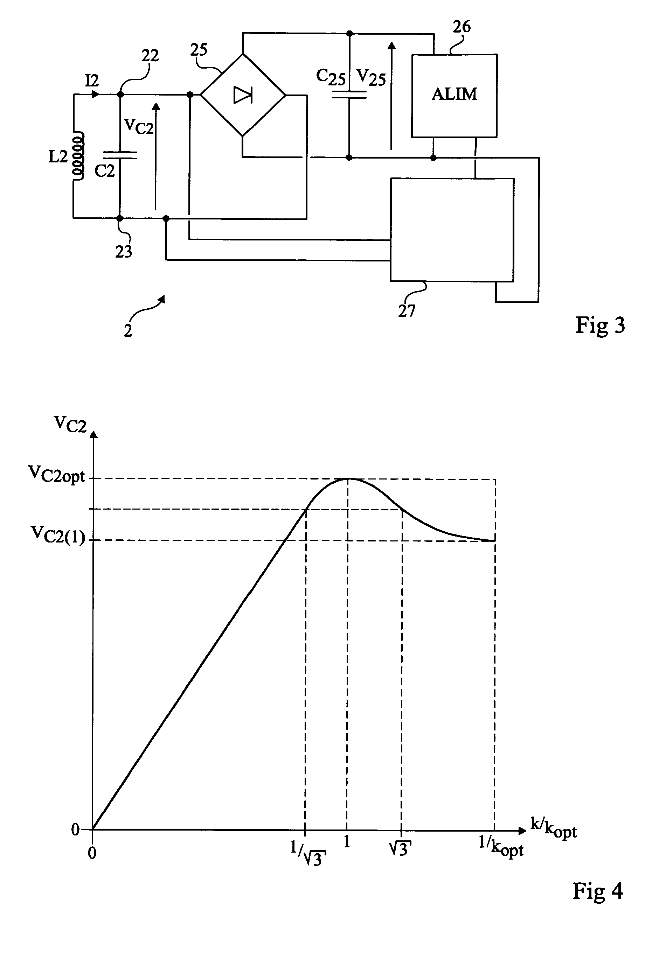

La figure 3 représente un mode de réalisation d'un transpondeur 2. Aux bornes 22 et 23 du circuit oscillant (inductance et antenne L2 et élément capacitif C2 en parallèle), est connecté un élément de redressement 25, par exemple un pont redresseur double alternance. Les sorties redressées du pont 25 sont reliées par un élément capacitif $C_{25}$ de lissage et fournissent une tension $V_{25}$ à un circuit 26 (ALIM) de gestion de l'alimentation du transpondeur. Le circuit 26 fournit aux autres circuits du transpondeur, symbolisés par un bloc 27, l'énergie nécessaire à leur fonctionnement. Les éléments 25, C25, 26 et 27 sont, en figure 1, inclus dans le bloc 21. Le circuit 27 prélève une information aux bornes 22 et 23 du circuit résonant pour être capable de démoduler les éventuelles informations reçues du terminal avant redressement. Par ailleurs, le circuit 27 comporte des éléments capacitifs et/ou résistif non représentés, dits de rétromodulation, aptes à moduler la charge (LOAD) que constitue le transpondeur sur le champ généré par le terminal. Cette modification de charge se traduit, côté terminal, par une modification du courant ou de la tension de son circuit oscillant (en supposant que l'amplificateur ou coupleur d'antenne 14, figure 2, est adapté à fournir un courant constant). Cette modification de courant ou de tension, captée par le transformateur d'intensité (15, figure 2) ou par tout autre élément de mesure (par exemple la mesure de tension aux bornes de l'élément capacitif C1), permet au terminal de décoder les informations reçues du transpondeur.

Le fait que la phase soit régulée côté terminal permet d'exploiter des mesures de courant et de tension dans le circuit oscillant du terminal pour en déduire des informations relatives au couplage du transpondeur lorsqu'il est dans le champ de la borne.

Ces informations prennent en compte, notamment, le couplage entre le transpondeur et le terminal, c'est-à-dire le coefficient de couplage entre le circuit oscillant du terminal et celui du transpondeur. Ce coefficient de couplage dépend essentiellement de la distance séparant le transpondeur du terminal. Le coefficient de couplage, noté k, entre les circuits oscillants d'un transpondeur et d'un terminal est toujours compris entre 0 et 1.

Dans les modes de réalisation qui vont être décrits, on utilise différentes relations liant les grandeurs électriques mesurables par le terminal dans différentes configurations de fonctionnement avec un transpondeur pour assister l'utilisateur dans le positionnement du transpondeur par rapport au terminal.

Quand le transpondeur est posé contre le terminal, on considère que l'on est dans une position de couplage maximal. On ne peut en effet plus rapprocher davantage les antennes du transpondeur et du terminal sauf à supprimer le boîtier du terminal.

Il est désormais connu qu'il existe entre le terminal et le transpondeur une position de couplage optimum $k_{opt}$ qui correspond à la position à laquelle la tension $V_{C2}$ récupérée aux bornes du transpondeur (plus précisément de son antenne) est maximale. Cette position de couplage optimum ne correspond pas nécessairement à la position de couplage maximal.

La figure 4 représente un exemple d'allure de la tension $V_{C2}$ récupérée côté transpondeur en fonction du couplage normalisé $k/k_{opt}$.

La courbe part de l'origine des ordonnées (tension nulle) pour un couplage nul. Cela correspond à un éloignement du transpondeur et du terminal tel qu'aucun signal n'est capté par le transpondeur. La tension $V_{C2}$ atteint un maximum $V_{C2opt}$ pour un coefficient de couplage $k_{opt}$ optimum ($k/k_{opt} = 1$), puis décroît vers une valeur intermédiaire $V_{C2(1)}$ atteinte au couplage 1. La position de couplage maximal se trouve à un endroit donné de cette courbe mais pas nécessairement à la position de couplage optimum. Cela dépend en particulier des différentes valeurs des éléments capacitifs et résistifs.

Deux autres points remarquables de la courbe de la figure 4 sont des points d'inflexion où le rapport $k/k_{opt}$ vaut respectivement $1/\sqrt{3}$ et $\sqrt{3}$, et où la tension $V_{C2}$ a la même valeur côté transpondeur.

Des relations exprimant la valeur de tension $V_{C2}$

en fonction du rapport du couplage courant sur le couplage optimum et reliant ces valeurs au courant I dans le circuit oscillant du terminal sont désormais habituelles. Par exemple, de telles relations sont données dans le document EP-A-2 114 019 (B8723 - 07-RO-225).

On prévoit d'exploiter ces relations pour assister l'utilisateur ayant en main le transpondeur à le placer à une distance optimale par rapport au terminal ou lecteur pour optimiser la communication.

La position qui correspond à un couplage nul (figure 4) correspond à une position du terminal à vide. Le courant I (figure 2) dans l'antenne ou le circuit oscillant du terminal a une valeur dite à vide, notée $I_V$ ou $I_{VIDE}$.

Comme indiqué, par exemple dans le document EP-A-2 114 019 susmentionné, le rapport du couplage courant k sur le couplage optimum $k_{opt}$ est lié au courant à vide et à la valeur courante, notée I, du courant I par la relation :

$$(k/k_{opt})^2 = I_V/I - 1.$$

Cette relation peut également s'écrire :

$$I_V/I = (k/k_{opt})^2 + 1.$$

Dans la position de couplage optimum ($k = k_{opt}$), le courant, noté $I_{opt} = I_V/2$. De plus, il ressort de la formule ci-dessus que, lorsqu'on est en position de couplage optimum, le rapport $I_V/I = 2$.

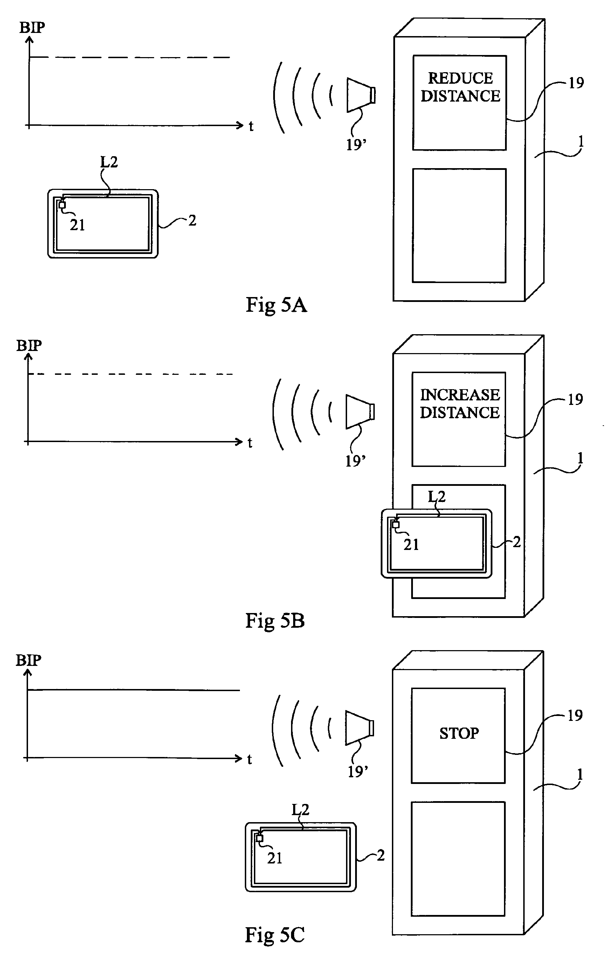

Les figures 5A, 5B et 5C illustrent, par des représentations schématiques de positions respectives d'un terminal 1 et d'un transpondeur 2, un mode de mise en oeuvre du procédé d'assistance au positionnement pour optimiser les communications.

On suppose que le terminal 1 est un dispositif mobile de télécommunication de type téléphone mobile ou smartphone et que le transpondeur 2 est une carte à puce. Tout ce qui va être décrit s'applique toutefois également au cas où le transpondeur est un terminal de télécommunication équipé d'un routeur NFC et où le terminal 1 est un autre dispositif mobile fonctionnant en mode lecteur ou est une borne fixe, etc.

Selon ce mode de réalisation, on exploite l'information relative du rapport $I_V/I$ du courant à vide sur le courant dans le circuit oscillant du terminal 1 pour déterminer si le transpondeur a besoin d'être rapproché ou écarté du terminal. On notera que, lorsqu'on désigne un rapprochement ou un écartement du transpondeur du terminal, cela peut correspondre à écarter ou rapprocher un terminal du transpondeur, par exemple, dans le cas de transpondeur fixe (transpondeur intégré à des affiches ou analogues).

L'exemple de la figure 5A correspond à une position dans laquelle le transpondeur 2 doit être rapproché du terminal 1. Un écran 19 du terminal affiche un message (REDUCE DISTANCE) à destination de l'utilisateur et/ou émet un signal sonore (BIP) au moyen d'un haut-parleur 19'. On prévoit, par exemple, une première fréquence du signal sonore ou un premier train d'impulsions sonore.

La figure 5B illustre le cas où le transpondeur doit être écarté du terminal (par exemple le cas où il serait posé sur le terminal et où la position de couplage optimum ne correspondrait pas à ce couplage maximal). Dans ce cas, l'afficheur 19 affiche un message différent (INCREASE DISTANCE) à destination de l'utilisateur et/ou émet un signal sonore à une autre fréquence ou un train d'impulsions sonores (bips) à une autre fréquence que dans le cas de la figure 5A.

La figure 5C illustre le cas où le transpondeur 2 est dans une position de couplage optimum par rapport au terminal 1. Dans ce cas, l'afficheur 19 l'indique à l'utilisateur, par exemple par un message de type STOP et/ou par un signal sonore différent (par exemple un signal sonore continu ou à une fréquence différente des deux cas précédents).

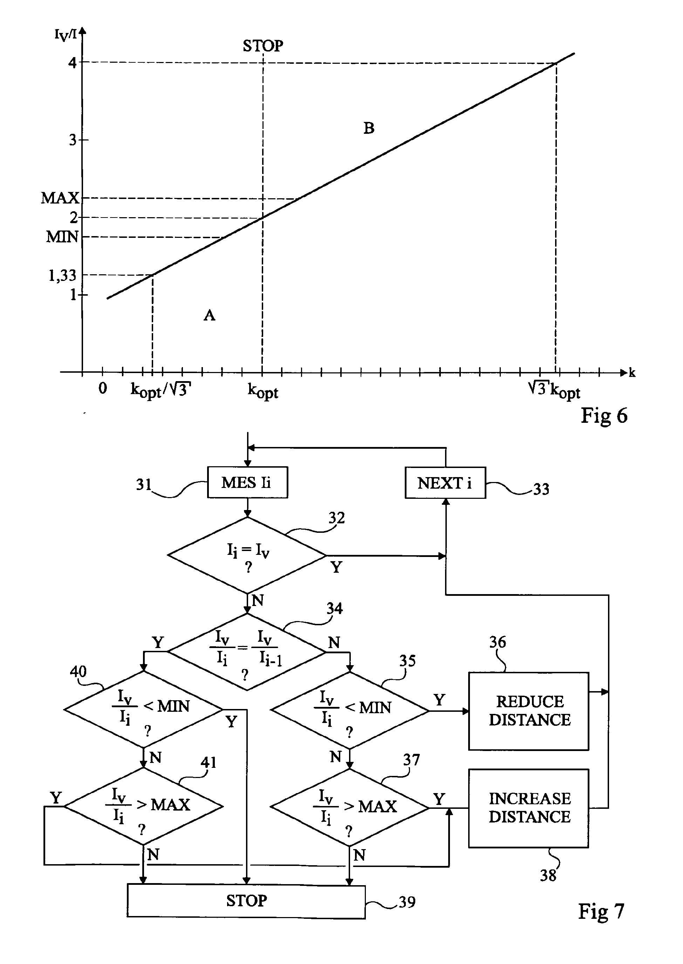

La figure 6 illustre l'allure du rapport $I_V/I$ en fonction du couplage k.

Cette allure est remarquable en ce qu'elle est linéaire depuis le couplage nul ($I_V/I = 1$) en passant par le point où le couplage optimum donne un rapport $I_V/I = 2$. Deux autres points remarquables apparaissent sur la courbe de la figure 6. Il s'agit des points d'inflexions dans la courbe de la figure 4. Aux positions correspondant à ces points d'inflexion, cela se traduit, côté terminal, par un rapport du courant $I_V/I$ valant respectivement 1,33

$$(k = k_{opt} / \sqrt{3}) \text{ et } 4 (k = \sqrt{3} \cdot k_{opt}).$$

On sait également que la valeur $V_{C2max}$ est atteinte pour une valeur du couplage courant k, soit inférieure, soit supérieure au couplage optimum.

Ainsi, la mesure du courant I et la connaissance du courant à vide $I_V$ suffisent pour déterminer le couplage courant k par rapport au couplage optimum $k_{opt}$.

On notera que lorsque l'on parle de la mesure du courant I, on considère l'obtention d'une information représentative de ce courant I. Toutefois, une mesure du courant est préférée par rapport à une mesure de tension plus difficile à comparer.

Si l'on est dans une situation où le courant I est inférieur à la moitié du courant à vide ($I_V/I > 2$), on est dans une position (zone B, figure 6) où le couplage courant est supérieur au couplage optimum $k_{opt}$. Le couplage optimum correspond alors à une position du transpondeur plus éloignée du terminal que lorsque celui-ci est posé dessus. En d'autres termes, le couplage optimum peut être atteint en écartant le transpondeur du terminal et il existe une distance entre le transpondeur et le terminal pour laquelle la tension récupérée $V_{C2}$ passe par le maximum $V_{C2opt}$. Le maximum $V_{C2opt}$ ne correspond pas à la valeur $V_{C2max}$ et cette valeur $V_{C2max}$ est inférieure à la valeur $V_{C2opt}$.

Si le courant I est supérieur à $I_V/2$ ($I_V/I < 2$), on est alors dans une position (zone A, figure 6) où le couplage courant est inférieur au couplage optimum. Cela signifie que le couplage optimum $k_{opt}$ correspond à une position du transpondeur plus proche du terminal. En d'autres termes, le couplage optimum peut être atteint en rapprochant le transpondeur du terminal.

Dans les deux cas ci-dessus, le transpondeur à téléalimenter ne peut pas en principe bénéficier du maximum possible de tension $V_{C2opt}$ afin d'assurer une communication optimale.

La figure 7 est un organigramme simplifié d'un mode de mise en oeuvre du procédé d'assistance au positionnement illustré par les figures 5A à 5C et tirant profit de l'allure de la figure 6.

On mesure (bloc 31, MES $I_i$) périodiquement la valeur courante $I_i$ du courant dans le terminal. La périodicité de la mesure est choisie pour être la plus courte possible tout en restant compatible avec le temps nécessaire à l'exploitation des mesures (à l'exécution du procédé entre deux mesures). La valeur courante $I_i$ est alors comparée (bloc 32, $I_i = I_V$ ?) à la valeur à vide. En cas d'égalité (sortie Y du bloc 32), cela signifie qu'aucun transpondeur n'est présent dans le champ du terminal et on reboucle sur une mesure ultérieure de la valeur courante du courant (bloc 33, $NEXT_i$).

Quand un transpondeur se trouve dans le champ du terminal, la valeur à vide n'est plus égale à la valeur courante (sortie N du bloc 32).

On calcule alors le rapport du courant à vide sur la valeur courante $I_i$ et on compare (bloc 34, $I_V/I_i = I_V/I_{i-1}$ ?) cette valeur par rapport au rapport calculé à l'itération précédente (i-1). Ce test revient à déterminer si la distance entre le transpondeur et le terminal varie.

Si la distance varie (sortie N du bloc 34), c'est-à-dire que l'utilisateur bouge l'un des deux éléments par rapport à l'autre, on détermine si le rapport des courants est compris dans une plage acceptable définie par deux seuils MIN et MAX autour du rapport valant 2, c'est-à-dire autour du couplage optimum avec une tolérance acceptable. Pour cela, on commence par exemple par comparer si le courant est inférieur au seuil inférieur (bloc 35, $I_V/I_i < MIN$ ?). Dans l'affirmative (sortie Y du bloc 35), cela signifie qu'il faut rapprocher les deux éléments (bloc 36, REDUCE DISTANCE). Dans la négative, (sortie N du bloc 35), on compare la valeur courante $I_V/I_i$ par rapport au seuil maximal (bloc 37, $I_V/I_i > MAX$ ?). Si le seuil supérieur MAX est dépassé (sortie Y du bloc 37), cela signifie que le transpondeur doit être écarté du terminal dans la mesure où on a dépassé le point de couplage optimum (bloc 38, INCREASE DISTANCE). Dans les deux cas, on effectue ensuite une mesure ultérieure pour vérifier si l'utilisateur a bien pris en compte la consigne (bloc 33, $NEXT_i$).

Si le transpondeur est dans la plage de distance acceptable (sortie N du bloc 37), on affiche ou on indique à l'utilisateur que cette position est correcte et qu'il n'a plus à bouger (bloc 39, STOP).

Si le transpondeur ne bouge plus par rapport au terminal (sortie Y du bloc 34), on examine sa position par rapport au couplage optimum. Par exemple, on commence par regarder s'il est trop éloigné (bloc 40, $I_V/I_i < MIN$ ?). Dans l'affirmative (sortie Y du bloc 40), cela signifie que bien que le transpondeur ait été collé sur le terminal, la position de couplage optimum ne peut pas être atteinte en le rapprochant encore plus, généralement à cause du boîtier du terminal. On demande alors à l'utilisateur de s'arrêter (bloc 39).

Si la position d'absence de mouvement correspond à une position supérieure au minimum, on vérifie (bloc 41, $I_V/I_i > MAX$ ?) si le rapport $I_V/I_i$ est supérieur à la valeur maximale. Dans l'affirmative (sortie Y du bloc 41), on indique à l'utilisateur qu'il faut qu'il éloigne le transpondeur du terminal (bloc 38). Dans la négative, on lui indique de ne plus bouger dans la mesure où on est alors bien compris dans la plage acceptable comprise entre les seuils MIN et MAX.

Le choix des seuils MIN et MAX dépend de l'application et est généralement effectué pour conférer une hystérésis, évitant au système d'indication de varier en permanente. En effet, on aurait pu penser comparer le seuil directement par rapport à la valeur 2. Toutefois, cela conduirait en pratique et en raison du fait que l'objet est porté par un utilisateur et donc sensible au déplacement de sa main, à un système instable.

Divers modes de réalisation ont été décrits, diverses variantes et modifications apparaîtront à l'homme de l'art. En particulier, le choix des seuils acceptables pour le rapport des courants et la périodicité des mesures et des itérations est à la portée de l'homme du métier en fonction de l'application. De plus, les relations d'inégalité pourront correspondre à des inégalités strictes ou larges. En outre, d'autres moyens indicateurs que des indicateurs sonores et visuels pourront être utilisés. Par exemple, on pourra prévoir un système faisant vibrer le transpondeur dans le cas où celui-ci est un dispositif mobile de télécommunication équipé d'un routeur NFC et cesser la vibration lorsque la position atteinte est correcte ou à l'inverse le faire vibrer une fois que cette position atteinte est correcte. Par ailleurs, la mise en oeuvre pratique des modes de réalisation décrits est à la portée de l'homme du métier à partir des indications fonctionnelles données ci-dessus et en utilisant des outils matériels et logiciels habituellement présent dans les systèmes à transpondeur.

**Revendications**

**1.** Procédé d'assistance au positionnement d'un transpondeur électromagnétique (2) vis-à-vis d'un terminal (1) par un utilisateur, dans lequel :

une première valeur ($I_i$) du courant (I) dans un circuit oscillant du terminal est périodiquement mesurée ;

une deuxième valeur d'un rapport entre une valeur à vide ($I_v$) de ce courant, mémorisée lorsqu'aucun transpondeur n'est dans le champ du terminal, et la première valeur est calculée ; et des éléments d'information à destination de l'utilisateur sont commandés en fonction de ladite deuxième valeur.

2.  Procédé selon la revendication 1, dans lequel ladite deuxième valeur est comparée par rapport à deux seuils (MIN, MAX) encadrant la valeur 2.

3.  Procédé selon la revendication 2, dans lequel les seuils (MIN, MAX) sont choisis en fonction de paramètres de fonctionnement autour d'une position de couplage optimum dans laquelle on considère que la communication entre le transpondeur et le terminal est optimale.

4.  Procédé selon la revendication 2 ou 3, dans lequel lorsque ladite valeur du rapport est comprise entre les deux seuils (MIN, MAX), le terminal (1) signale à l'utilisateur de ne plus modifier la distance entre le transpondeur (2) et le terminal.

5.  Procédé selon l'une quelconque des revendications 2 à 4, dans lequel on compare successivement la deuxième valeur aux deux seuils pour définir si l'utilisateur doit augmenter ou réduire la distance entre le terminal et le transpondeur.

6.  Procédé selon l'une quelconque des revendications 1 à 5, dans lequel ladite deuxième valeur est comparée (34) à la valeur dudit rapport calculée lors d'une mesure précédente pour déterminer si la distance entre le transpondeur et le terminal évolue.

7.  Procédé selon l'une quelconque des revendications 1 à 6, dans lequel lesdits éléments d'information indiquent à l'utilisateur s'il doit réduire ou augmenter la distance entre le transpondeur et le terminal ou ne plus modifier cette distance.

8.  Terminal de lecture d'un transpondeur électromagnétique comportant des moyens adaptés à la mise en oeuvre du procédé conforme à l'une quelconque des revendications 1 à 7.

9.  Téléphone mobile comportant un terminal conforme à la revendication 8.

**Patentansprüche**

1.  Ein Verfahren zur Unterstützung der Positionierung eines elektromagnetischen Transponders (2) durch einen Benutzer bezüglich eines Anschlusses (1), wobei Folgendes vorgesehen ist:

periodisches Messen eines erster Wertes ($I_i$) des Stroms (I) in einer Oszillationsschaltung des Anschlusses;
Berechnen eines zweiten Wertes eines Verhältnisses zwischen einem Nicht-Last-Wert ($I_v$) dieses Stroms gespeichert, wenn kein Transponder in dem Feld des Anschlusses ist, und dem ersten Wert; und
Steuern gemäß dem zweiten Wert von Teilen der für den Benutzer vorgesehenen Information.

2.  Das Verfahren nach Anspruch 1, wobei der erwähnte zweite Wert mit zwei Schwellen (MIN, MAX), die den Wert 2 umgeben, verglichen wird.

3.  Das Verfahren nach Anspruch 2, wobei die Schwellen (MIN, MAX), gemäß den Betriebsparametern, um eine optimale Kopplungsposition herum, in der die Kommunikation zwischen dem Transponder und dem Anschluss als optimal angesehen wird, ausgewählt werden.

4.  Das Verfahren nach Anspruch 2 oder 3, wobei dann, wenn der erwähnte Wert des Verhältnisses zwischen den zwei Schwellen (MIN, MAX) liegt, der Anschluss (1) den Benutzer informiert, nicht weiterhin den Abstand zwischen dem Transponder (2) und dem Anschluss zu modifizieren.

5.  Das Verfahren nach irgendeinem der Ansprüche 2 bis 4, wobei der zweite Wert aufeinanderfolgend mit den zwei Schwellen verglichen wird, um zu definieren, ob der Benutzer den Abstand zwischen dem Anschluss und dem Transponder erhöhen oder vermindern muss.

6.  Das Verfahren nach irgendeinem der Ansprüche 1 bis 5, wobei der zweite Wert verglichen (34) wird mit dem Wert des erwähnten Verhältnisses berechnet in einer vorausgehenden Messung, um zu Bestimmen, ob der Abstand zwischen dem Transponder und dem Anschluss sich verändert.

7.  Das Verfahren nach einem der Ansprüche 1 bis 6, wobei die erwähnten Teile der Information dem Benutzer anzeigen, ob er den Abstand zwischen dem Transponder und dem Anschluss vermindern oder vergrößern muss oder diesen Abstand nicht weiterhin modifizieren muss.

8.  Ein elektromagnetischer Transponder-Leseanschluss, der Mittel aufweist, die in der Lage sind, das Verfahren irgendeines der Ansprüche 1 bis 7 zu implementieren.

9.  Ein Mobiltelefon, das den Anschluss des Anspruchs 8 aufweist.

**Claims**

1.  A method for assisting the positioning of an electromagnetic transponder (2) by a user with respect to a terminal (1), wherein:

    a first value ($I_i$) of the current (I) in an oscillating circuit of the terminal is periodically measured;
    a second value of a ratio between a no-load value ($I_v$) of this current, stored when no transponder is in the field of the terminal, and the first value, is calculated; and
    pieces of information intended for the user are controlled according to said second value.

2.  The method of claim 1, wherein said second value is compared with two thresholds (MIN, MAX) surrounding value 2.

3.  The method of claim 2, wherein the thresholds (MIN, MAX) are selected according to operating parameters around an optimum coupling position in which the communication between the transponder and the terminal is considered to be optimal.

4.  The method of claim 2 or 3, wherein when said value of the ratio is between the two thresholds (MIN, MAX), the terminal (1) notifies the user to no longer modify the distance between the transponder (2) and the terminal.

5.  The method of any of claims 2 to 4, wherein the second value is successively compared with the two thresholds to define whether the user must increase or decrease the distance between the terminal and the transponder.

6.  The method of any of claims 1 to 5, wherein said second value is compared (34) with the value of said ratio calculated in a previous measurement to determine whether the distance between the transponder and the terminal varies.

7.  The method of any of claims 1 to 6, wherein said pieces of information indicate to the user whether he must decrease or increase the distance between the transponder and the terminal or no longer modify this distance.

8.  An electromagnetic transponder read terminal comprising means capable of implementing the method of any of claims 1 to 7.

9.  A cell phone comprising the terminal of claim 8.

Fig 1

Fig 2

...

Fig 3

Fig 4

Fig 5A

Fig 5B

Fig 5C

Fig 6

Fig 7

**EP 2 715 606 B1**

## RÉFÉRENCES CITÉES DANS LA DESCRIPTION

**Documents brevets cités dans la description**

- EP 0857981 A

- EP 2114019 A